Europäisches Patentamt

European Patent Office

Office européen des brevets

(11) Publication number: **0 205 052 B1**

# EUROPEAN PATENT SPECIFICATION

(45) Date of publication of patent specification: **08.04.92**  (51) Int. Cl.⁵: **G01N 27/90**, G01N 29/04, G01N 1/32, G01N 3/40

(21) Application number: **86107347.6**

(22) Date of filing: **30.05.86**

(54) **A method of evaluating the residual life of a turbine rotor by a non destructive procedure.**

(30) Priority: **14.06.85 JP 89659/85 U**
**18.04.86 JP 88357/86 U**

(43) Date of publication of application:
**17.12.86 Bulletin 86/51**

(45) Publication of the grant of the patent:
**08.04.92 Bulletin 92/15**

(84) Designated Contracting States:
**CH DE GB LI**

(56) References cited:
**FR-A- 1 150 404**

**PATENT ABSTRACTS OF JAPAN, vol. 6, no. 195 (P-146)(1073), 5th October 1982 & JP-A-57-104 837**

**INDUSTRIAL LABORATORY, vol. 41, no. 1, January 1975, page 79, New York, US; A.M. KOVRIGA et al.: "A unit for the semiautomatic preparation of metal micro-sections"**

(73) Proprietor: **MITSUBISHI JUKOGYO KABUSHIKI KAISHA**
**5-1, Marunouchi 2-chome Chiyoda-ku Tokyo 100(JP)**

(72) Inventor: **Kamei, Hiromasa Takasago Technical Inst.**
**Mitsubishi Jukogyo K.K. 1-1, Shinhama 2-chome**
**Arai-cho Takasago-shi Hyogo-ken(JP)**
Inventor: **Nishikawa, Yoshihisa Takasago Technical Inst.**
**Mitsubishi Jukogyo K.K. 1-1, Shinhama 2-chome**
**Arai-cho Takasago-shi Hyogo-ken(JP)**
Inventor: **Kushimoto, Shoji Takasago Technical Inst.**
**Mitsubishi Jukogyo K.K. 1-1, Shinhama 2-chome**
**Arai-cho Takasago-shi Hyogo-ken(JP)**
Inventor: **Oshita, Setsujiro Takasago Technical Inst.**
**Mitsubishi Jukogyo K.K. 1-1, Shinhama 2-chome**
**Arai-cho Takasago-shi Hyogo-ken(JP)**

PATENT ABSTRACTS OF JAPAN, vol. 8, no. 228 (P-308)(1665), 19th October 1984 & JP-A-59-108 937

PATENT ABSTRACTS OF JAPAN, vol. 6, no. 258 (P-163)(1136), 17th December 1982 & JP-A-57-154 038

PATENT ABSTRACTS OF JAPAN, vol. 6, no. 166 (P-138)(1044), 31st August 1982 & JP-A-57-084 332

PATENT ABSTRACTS OF JAPAN, vol. 9, no. 327 (P-415)(2050), 21st December 1985 & JP-A-60-151 541

PATENT ABSTRACTS OF JAPAN, vol. 10, no. 30 (P-426)(2087), 5th February 1986 & JP-A-60-179 628

Inventor: **Kimura, Akihiko Takasago Technical Inst.**
**Mitsubishi Jukogyo K.K. 1-1, Shinhama 2-chome**
**Arai-cho Takasago-shi Hyogo-ken(JP)**
Inventor: **Koiwa, Masami Takasago Technical Inst.**
**Mitsubishi Jukogyo K.K. 1-1, Shinhama 2-chome**
**Arai-cho Takasago-shi Hyogo-ken(JP)**
Inventor: **Goto, Touru Takasago Technical Inst.**
**Mitsubishi Jukogyo K.K. 1-1, Shinhama 2-chome**
**Arai-cho Takasago-shi Hyogo-ken(JP)**
Inventor: **Itoh, Hitomi Takasago Technical Inst.**
**Mitsubishi Jukogyo K.K. 1-1, Shinhama 2-chome**
**Arai-cho Takasago-shi Hyogo-ken(JP)**
Inventor: **Okada, Masao c/o Takasago Machinery Works of**
**Mitsubishi Jukogyo K.K. 1-1, Shinhama 2-chome**
**Arai-cho Takasago-shi Hyogo-ken(JP)**
Inventor: **Hayashi, Motoyuki c/o Takasago Machinery Works of**
**Mitsubishi Jukogyo K.K. 1-1, Shinhama 2-chome**
**Arai-cho Takasago-shi Hyogo-ken(JP)**
Inventor: **Koyama, Teruo c/o Takasago Technical Institute**
**Mitsubishi Jukogyo K.K. 1-1, Shinhama 2-chome**
**Arai-cho Takasago-shi Hyogo-ken(JP)**
Inventor: **Kadoya, Yoshikuni Takasago Technical Institute**
**Mitsubishi Jukogyo K.K. 1-1, Shinhama 2-chome**
**Arai-cho Takasago-shi Hyogo-ken(JP)**

(74) Representative: **Henkel, Feiler, Hänzel & Partner**
**Möhlstrasse 37**
**W-8000 München 80(DE)**

## Description

Backgroud of the invention:

Field of the invention:

The present invention relates to a method of evaluating the residual life of a turbine rotor by a non-destructive procedure.

Description of the prior art:

FR-A-1 150 404 discloses an electrode rod carrying a perforated disc at its one end and being connected to the cathode of a DC-source at its other end. The electrode is surrounded by a sponge or the like kept in a hollow cylinder which is open at one end and closed at the other end. The perforated disc is covered with a tissue and covers the open end of the cylinder. The sponge is filled with an electrolytic liquid. A surface to be inspected is connected to the anode of the DC-source.

With this disclosed implement the surface can be polished.

JP-A-57 104 837 discloses to compute the creeping life of a metal compound by using a relation between hardness and a Larson-Miller parameter during various types of tests. In this method, it is also necessary to introduce the time during which the metal is used and the temperature into the calculation.

In the past, while a defect hunting inspection for a turbine rotor has been effected at every predetermined interval, only determination of whether a defect exists or not was effected and it was not executed to evaluate a residual life by inspection of aging deterioration. Indeed, a method for executing such inspection was not known.

Among existing thermal power turbines, turbine units which have been in use for more than 10 years form the majority, and they tend to be compelled to be put under more and more severe use hereafter.

Under such circumstances, high-pressure and medium-pressure turbines which can be said to be the center of the thermal power turbine give rise to the fear that in association with use over a long period, changes in the nature of the constituent material may arise and lead to rapid deterioration because steam conditions are especially severe.

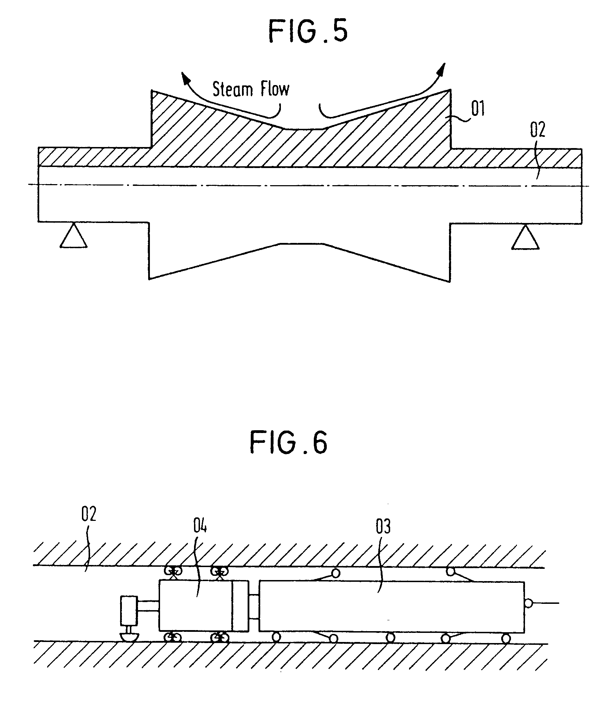

In such high-pressure and medium-pressure rotor portion where aging deterioration becomes remarkable, one can refer to the proximity of a center bore 02 of a turbine rotor main body 01 in Fig. 5. This center hole 02 has a very small diameter of 100 mm to 180 mm, and moreover, a location where aging deterioration becomes remarkable is the deep location in the proximity of the center in the longitudinal direction of the rotor. Non-destructive inspection at such a deep location along the center bore, is generally difficult.

Therefore, in the heretofore practiced center bore inspection, defect hunting inspections relying upon ultrasonic defect hunting (UT) or magnetic defect hunting (MT) which is relatively easy in inspective measurement, have been effected. However, according to this procedure, it is only possible to confirm cracks, and diagnosis of aging deterioration that is necessary for effecting estimation of a residual life such as when cracks as well as deterioration of nature of material will be generated in the future, cannot be done.

On the other hand, if aging deterioration becomes remarkable as a result of use over a long period, subsequent utilization of the turbine is greatly limited, and hence a schedule for utilization itself cannot be set up.

Therefore, it is essentially necessary to directly observe the most dangerous part of a working machine in a non-destructive manner, thereby determining the degree of aging deterioration and an initial estimate of the residual life.

SUMMARY OF THE INVENTION:

It is therefore one object of the present invention to provide an evaluation method for the residual life of a turbine by a non-destructive procedure even at a deep location along a center bore of a turbine rotor.

According to the present invention, the evaluation method for a residual life of a turbine through a non-destructive procedure is characterized by the features of claim 1.

According to the present invention, owing to the above-described novel features, the following advantages can be obtained:

(1) A degree of defect and deterioration prior to generation of cracks can be detected in a non-destructive manner.

The terms "a degree of defect and deterioration prior to generation of cracks" as used herein, implies changes of nature of material appearing in the form of dislocation of metallic crystal lattices, changes of metallurgical structures or the like, and micro-fine defects of cavities and microscopic cracks produced in the stage prior to generation of cracks, as well as a degree of deterioration of them.

(2) For the purpose of detection in a non-destructive manner, measurement of a hardness as well as observation of creep cavities by taking a replica can be achieved.

Further enhancements of the method according to the invention are described in the dependant claims.

The above-mentioned and other objects, features and advantages of the present invention will become more apparent by reference to the following description of preferred embodiments of the invention taken in conjunction with the accompanying drawings.

BRIEF DESCRIPTION OF THE DRAWINGS:

In the accompanying drawings:

Fig. 1 is a flow chart showing one preferred embodiment of an evaluation system for a residual life of a turbine through a non-destructive procedure according to the present invention;

Fig. 2(a) is a diagram showing one example of changes of a hardness as a result of heating over a long period of time;

Fig. 2(b) is a diagram showing one example of rearranged changes of a hardness caused by creep;

Fig. 3 is a diagram showing one example of distribution of a hardness in the axial direction of a rotor used over a long period of time.

Fig. 4 is a diagram showing examples of examination curves of a number of cavities versus a creep condition;

Fig. 5 is a cross-sectional view of a turbine rotor that is an object of inspection;

Fig. 6 is a schematic view of a center bore unit to be used for practicing the present invention;

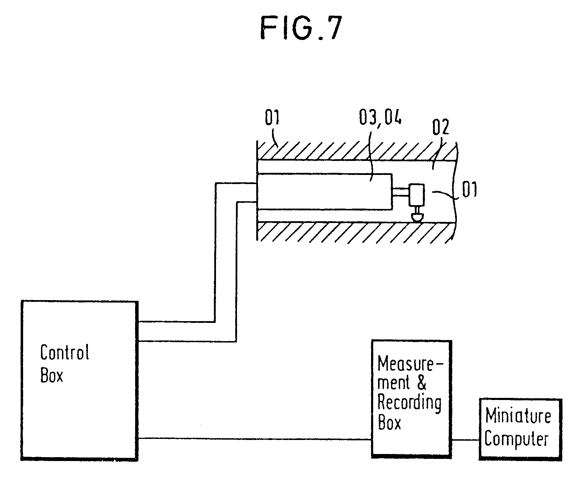

Fig. 7 is an overall system diagram of apparatuses to be used for practicing the present invention;

Fig. 8 is a front view of an electrolytic polishing apparatus;

Fig. 9 is a side view of the apparatus shown in Fig. 8;

Fig. 10 is a detailed view of a part of Fig. 8;

Fig. 11 is a longitudinal cross-section view of a buff polishing apparatus;

Fig. 12 is a front view showing the state where the apparatus shown in Fig. 11 is being used on an inner surface of a long small-diameter pipe;

Fig. 13 is a longitudinal cross-section view of the same apparatus in a stationary state; and

Fig. 14 is a longitudinal cross-section view of the same apparatus in a rotating state.

DESCRIPTION OF THE PREFERRED EMBODIMENT:

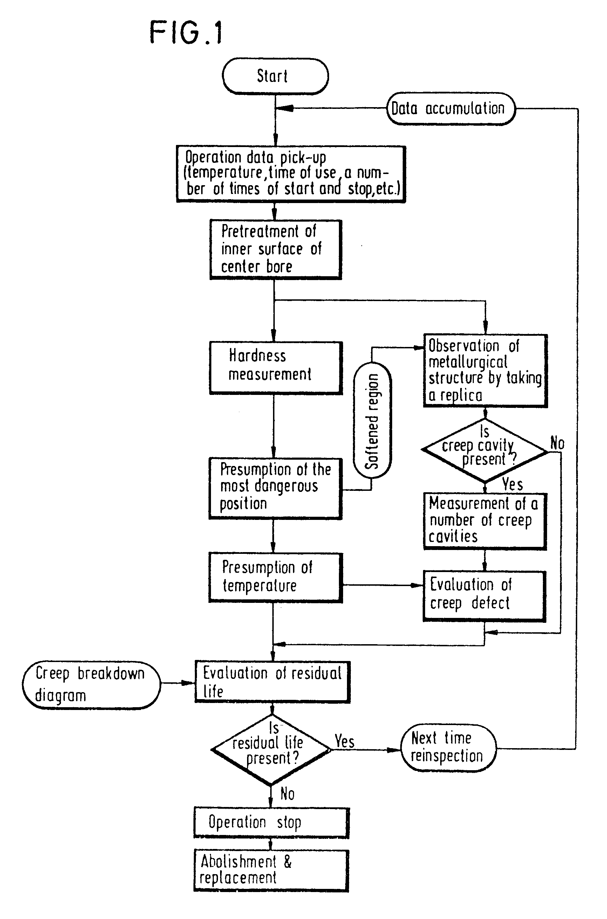

As shown by a flow chart in Fig. 1, the evaluation system for a residual life according to the present invention operates in the following manner:

① At first, operation data of a rotor to be inspected are noted.

Conditions for use are clarified from operation data such as temperature, time of use, a number of times of start and stop, etc. so that various evaluations by a non-destructive inspection can be effected correctly.

② Next, at a position on an inner surface of a center bore where it is desired to measure, pretreatment is carried out so that various measurements can be done correctly.

The pretreatment forms a finished surface condition that is necessary for the next measurement, and for the purpose of hardness measurement the surface is finished within 3S in terms of a surface roughness, while for the purpose of taking a replica it is finished up to a mirror polished surface.

With regard to these grinding and polishing operations, further description will be made later.

③ At the position where it is desired to measure, the following values are measured:

1) Measurement of hardness:

At the angular positions of 0 degrees and 180 degrees on the circumference of the rotor center bore, measurement is carried out at an equal pitch (for instance, at a pitch of 50 mm) over the entire length in the axial direction.

2) Observation of metallurgical structure (carbides, creep cavities, etc) by taking a replica:

With regard to the location of observation, it is determined on the basis of the results of the hardness measurement.

If softening is observed at the rotor drum portion, a replica of the softened region is taken. In the event that softening is not observed, then a replica of a dangerous portion of the rotor which portion is estimated from separate calculation, is made.

④ As a method for evaluating a life on the basis of a hardness, the following procedure is employed:

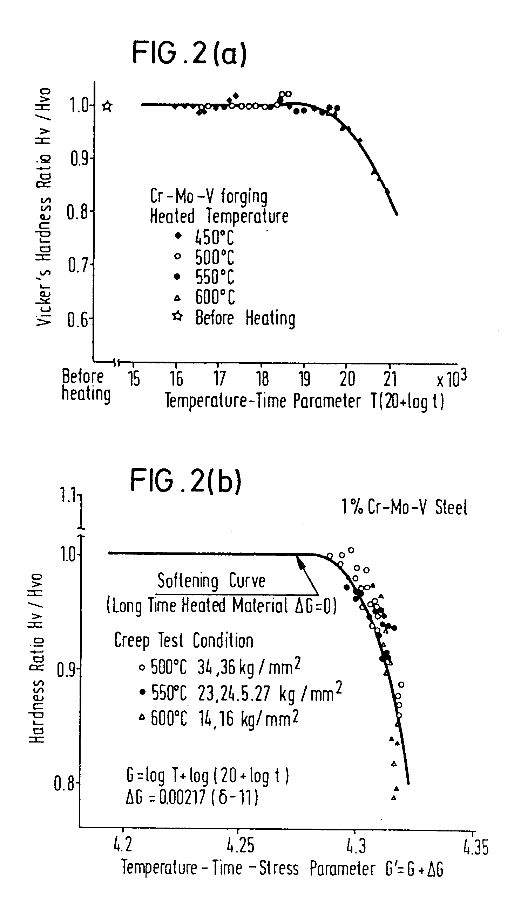

Fig. 2(a) shows changes of a hardness in the case where Cr-Mo-V steel was subjected to heating for a long period of time. As seen in this figure, if the data points are plotted with respect to a parameter consisting of a combination of temperature T and time $\underline{t}$ which form the heating conditions, then changes of the hardness Hv represented in terms of a ratio to an initial hardness Hvo can be approximated by a single curve.

In addition, changes of the hardness ratio Hv/Hvo in the case where creep was given also can be regularly plotted with respect to a parameter consisting of a combination of temperature, time and stress (See Fig. 2(b)).

From these results, a method for estimating a creep defect on the basis of hardness measurement, can be proposed.

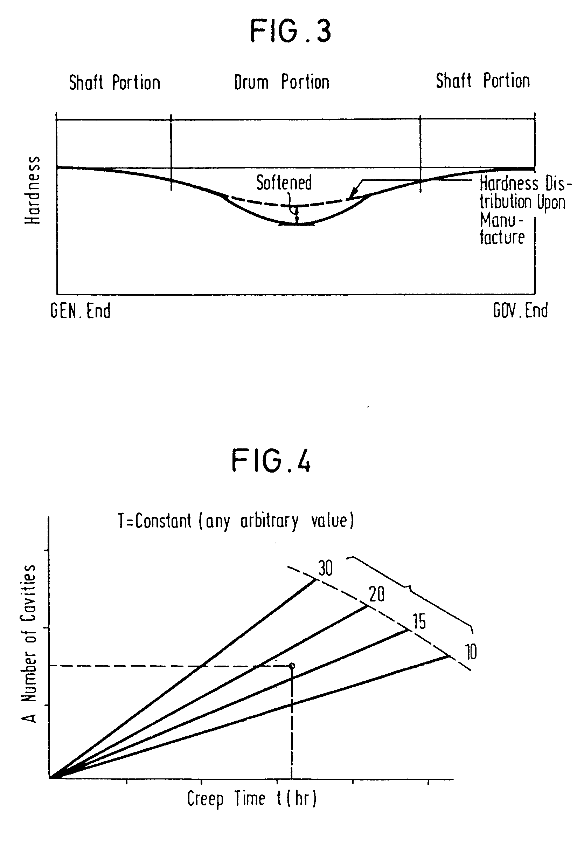

Measured values of a hardness at the center bore of a rotor used for a long period reveal themselves, for instance, as shown in Fig. 3. By making use of the diagram in Fig. 2(b), temperature and the like upon use are estimated, and thereby a creep defect and a residual life are presumed.

⑤ As a method for evaluating a life on the basis of creep cavity observation, the following procedure is employed:

Here, the term "creep cavity" implies a cavity produced by creep stress, and it can be confirmed by observing a picked-up replica with an electron microscope.

Between the number of creep cavities and the creep test condition is present a relation, for example, as shown in Fig. 4.

It is to be noted that with regard to the relation between the number of creep cavities and the creep test condition, an examination curve which serves as a reference for comparison is initially produced by means of a test piece.

Next, evaluation of creep defect is carried out by making use of the examination curves in the equi-stress diagram at an arbitrary temperature in Fig. 4.

It is to be noted that the examination curves in Fig. 4 are obtained from a calculation formula based on experimental data, and since the contents have been transformed into software by means of a miniature computer, examination curves at arbitrary temperatures can be easily drawn out to be utilized.

In this way, it is possible to measure the age deterioration of the material of a turbine rotor in a non-destructive manner, to predict an available time limit, and to check and prepare for the replacement and the discarding of equipment at an early time.

Description is now made of surface finishing as a pretreatment of that portion where it is desired to measure.

(1) Grinder Polishing:

As shown in Fig. 6, a unit consisting of a guide device 03 and a grinding machine 04 is inserted into a center bore 02 of a turbine rotor to polish a particular portion of the surface of the center bore.

Upon measurement of a hardness, the surface is finished to within 3S in terms of a surface roughness by grinder polishing.

(2) Mirror Polishing:

For the purpose of taking a replica, it is necessary to finish a grinder polished surface further into a mirror surface by electrolytic polishing or buffing.

(2-1) Electrolytic polishing:

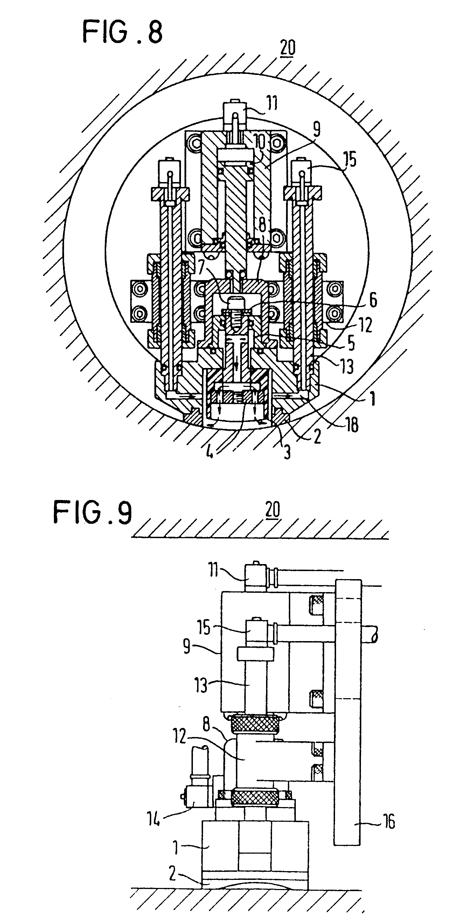

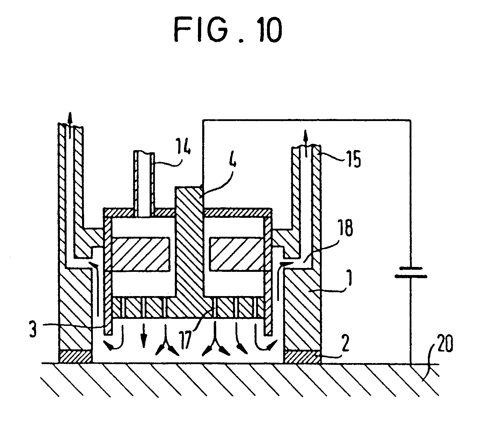

An electrolytic polishing apparatus is shown in Figs. 8, 9 and 10. This apparatus is designed as an apparatus for inspecting an inner surface of a pipe-like member having an inner diameter of about 100 mm. In this figure, reference numeral 1 designates an outer cylinder whose material is vinyl chloride, and its tip end 2 is made of sealing material such as rubber or sponge. Reference numeral 3 designates an exhaust guide cylinder for a corroding liquid, whose material is vinyl chloride or the like. Reference numeral 4 designates an electrode made of stainless steel. This electrode is a circular disc having a nearly equal area to that of a surface to be inspected, it is disposed in parallel to the surface to be inspected and distanced from it by several mm therefrom, and a large number of through-holes 17 for passing a corroding liquid therethrough are formed in the thicknesswise direction of the circular disc. Reference numeral 5 designates a feed port of a corroding liquid. Reference numeral 6 designates a current feed cable terminal to which a cable is connected, although not shown. Reference numeral 7 designates a bolt for fastening the current feed cable terminal 6 to the top of the electrode 4, numerals 8 to 13 designate members forming a mechanism for pressing the outer cylinder 1 and the electrode 4 within the outer cylinder against the surface to be inspected, numeral 9 designates an air cylinder, numeral 10 designates a piston rod, numeral 8 designates a connecting arm between a tip end portion of the rod 10 and the top of the outer cylinder 1, numeral 11 designates an air feed port, numerals 12 and 13 jointly designate a guide for vertically driving the outer cylinder 1, in which numeral 12 designates a slide portion for a guide rod 13, the guide rod 13 is hollow, and the tip end of the guide rod 13 is engaged with a left or right end of the outer cylinder 1 to form a return passageway of the corroding liquid which strikes against the surface to be inspected and becomes a waste liquid. Reference numeral 14 designates a feed port of a corroding liquid, which is connected to the feed port 5. Reference numeral 15 designates an exhaust port of a corroding liquid, and numerals 11, 14 and 15 designate vinyl hoses or the like which are led to a control panel. Reference numeral 16 designates a support plate for a head portion 1 - 7 of the electrolytic polishing apparatus, the vertical driving portion 8 - 13 and the corroding liquid feed and exhaust ports 14 and 15. At the tip end of this support plate 16 are mounted a slide for adjusting a vertical position and a magnet stand for fixing a head. Reference numeral 17 designates through-holes provided in the bottom wall of the electrode 4, numeral 18 designates an exhaust bore communicating with an exhaust port 15, and numeral 20 designates a body to be inspected.

When the outer cylinder 1 is pressed against the surface to be inspected, the sealing material 2 is collapsed. Subsequently, if a corroding liquid is fed from a corroding liquid tank (not shown), the corroding liquid passes from the feed port 14 through the electrode 4 to the surface to be inspected, then passes through the gap space between the exhaust guide cylinder 3 and the outer cylinder 1, and it is returned from the exhaust bore 18 through the exhaust port 15 to a waste liquid tank (not shown). At the time point when the corroding liquid fills the space between the surface to be inspected and the electrode 4, a voltage is applied between the electrode 4 and the surface to be inspected to make an electric current flow therebetween, and after the electric current has flowed for a predetermined period of time, a power source is switched off. Next, a valve in a corroding liquid feed pipe is closed, a valve in an alcohol washing liquid feed pipe is opened to feed alcohol from an alcohol tank (not shown) and thereby the surface to be inspected is washed with alcohol.

In this way, even electrolytic polishing in a narrow space to which a hand is not accessible, would become possible.

(2-2) Buffing:

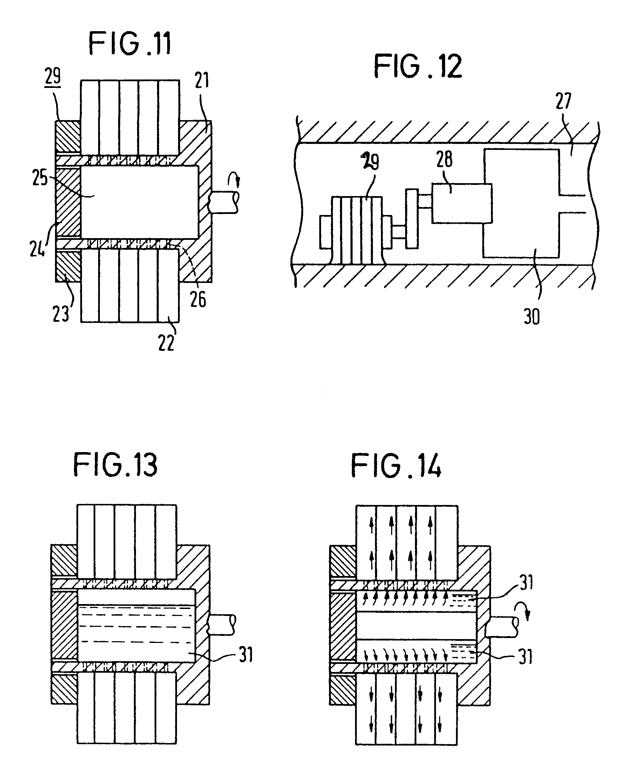

Now description will be made on a buffing apparatus with reference to Figs. 11 through 14. In these figures, reference numeral 21 designates a rotary cylinder, numeral 22 designates buffing cloths, numeral 23 designates a buff retainer, numeral 24 designates a lid of the rotary cylinder 21, numeral 25 designates a space in which water or a suspension is to be contained, numeral 26 designates thin holes, numeral 27 designates a long small-diameter pipe, numeral 28 designates a motor, numeral 29 designates a buffing apparatus, and numeral 30 designates a motor holding member.

The rotary cylinder 21 is equipped with the buffing cloths 22, and by threadedly engaging the buff retainer 23 the buffing cloths 22 are retained in position. In the space 25 of the rotary cylinder 21 is contained water or a suspension, and the space 25 is sealingly closed by threadedly engaging a lid 24 of the rotary cylinder. The buffing apparatus 29 consisting of a group of these members is mounted at a tip end of the motor 28, and they are equipped within a long small-diameter pipe 27. At this moment, it is preferable first to make grinding powder such as alumina or diamond powder adhere to the buffing cloths 22.

Now, operations of the buffing apparatus having the above-described structure will be explained with reference to Figs. 13 and 14. Fig. 13 shows a stationary state of the apparatus, where the water or suspension 31 within the rotary cylinder 21 would not leak out due to existence of the buffing cloths 22. However, if buffing is started and the rotary cylinder 21 begins to rotate as shown in Fig. 14, then the water or suspension 31 is splashed towards the outer circumference due to centrifugal forces, passes through the thin holes 26 and the gap space within the buffing cloths 22, and reaches the surface to be buffed. Accordingly, the buffing cloths 22 can achieve the buffing work without being dried by friction.

In this way, since the working of the inner surface of a long small-diameter pipe can be achieved without drying the buffing cloths, a mirror surface that is necessary for observing a metallurgical structure can be obtained easily.

Since many changes and modifications in design can be made to the above-described structure without departing from the spirit of the present invention, it is intended that all matter contained in the above description and illustrated in the accompanying drawings shall be interpreted to be illustrative and not as a limitation to the scope of the invention.

## Claims

1. A method of evaluating the residual life of a turbine rotor by a non-destructive procedure, characterized by
   - recording the conditions of use of the rotor e.g. temperature, time of use, number of times of start and stop etc;
   - pretreating by polishing, a portion of an inner surface of the centre bore (02) of the turbine rotor;
   - subsequently performing hardness measurements on the pretreated surface;
   - taking a replica of at least part of the pretreated surface, said at least part being determined on the basis of the results of the hardness measurements;
   - observing, from the replica, the number of creep cavities formed; and
   - comparing the number of creep cavities for the given rotor test conditions with a predetermined data curve, produced using results obtained from a reference test specimen, and from the comparison, predicting a residual life for the said rotor.

2. A method according to claim 1, wherein the polishing is electrolytic polishing.

3. A method according to claim 2 wherein said electrolytic polishing comprises - sealingly pressing one end of an outer cylinder (1) which encloses an electrode (4) formed as a rod with a perforated disc at one end thereof, to that portion of the inner bore surface to be inspected.

- passing a corroding liquid from a corroding liquid tank into said outer cylinder (1) and through the holes in said disc part of electrode (4), into contact with the surface to be inspected, then through an exhaust port (15) formed in said outer cylinder (1) to a waste liquid tank,
- applying a voltage between the electrode (4) and said surface while said corroding liquid is in contact with said surface, such that an electric current flows therebetween for a predetermined time.

4. A method according to claim 1 wherein the polishing is performed by buffing.

5. A method according to claim 4 wherein the steps of buffing include
- mounting and retaining annular shaped buffer cloths (22) on the outer circumference of a plurality of rotary cylinders (21) each with internal space (25) and filling the internal space (25) of said rotary cylinders (21) with water or a suspension,
- closing each said space (25) with a cylinder lid (24),
- rotating, by means of a motor (28) said plurality of cylinders (21) such that the water or suspension (31) splashes through thin holes (26) provided in the cylinder walls and through the gap space within the buffing cloths (22) to the surface to be buffed.

**Revendications**

1. Un procédé d'évaluation de la vie résiduelle d'un rotor de turbine par un processus non destructif, caractérisé par
- l'enregistrement des conditions d'utilisation du rotor, notamment la température, la durée d'utilisation, le nombre de démarrages et d'arrêts, etc ;
- le prétraitement par polissage d'une partie de la surface intérieure de l'alésage central (02) du rotor de turbine ;
- l'exécution subséquente des mesures de dureté sur la surface prétraitée ;
- la prise d'une réplique d'au moins une partie de la surface prétraitée, ladite partie étant déterminée sur la base des résultats des mesures de dureté ;
- l'observation, à partir de la réplique, du nombre de cavités de fluage ; et
- la comparaison du nombre de cavités de fluage pour les conditions données de test du rotor avec une courbe de données prédéterminées , produite en utilisant les résultats obtenus à partir d'un spécimen d'essai de référence et, à partir de la comparaison, la prédiction de la vie résiduelle pour ledit rotor.

2. Un procédé selon la revendication 1, dans lequel le polissage est un polissage électrolytique.

3. Un procédé selon la revendication 2, dans lequel ledit polissage électrolytique comporte :
- le pressage de manière étanche d'une extrémité d'un cylindre extérieur (1) qui renferme une électrode (4) sous la forme d'une tige et portant un disque perforé à une extrémité, contre la partie de la surface de l'alésage intérieur à inspecter,
- le passage d'un liquide corrosif depuis un réservoir de liquide corrosif jusqu'audit cylindre extérieur (1), à travers les orifices de ladite partie en disque de l'électrode (4), jusqu'au contact avec la surface à inspecter, puis à travers un orifice de sortie (15) formé dans ledit cylindre extérieur (1) pour parvenir à un réservoir de liquide usé ;
- l'application d'une tension entre l'électrode (4) et ladite surface tandis que ledit liquide corrosif est en contact avec ladite surface, de telle manière qu'un courant électrique circule entre elles pendant une durée prédéterminée.

4. Un procédé selon la revendication 1, dans lequel le polissage est exécuté au disque.

5. Un procédé selon la revendication 4,dans lequel les phases du polissage au disque comportent
- le montage et le maintien de tissus de polissage (22) de forme annulaire sur la circonférence extérieure d'une pluralité de cylindres tournants (21) présentant chacun un espace intérieur (25), et le remplissage de l'espace intérieur (25) desdits cylindres tournants (21) par de l'eau ou une suspension,
- la fermeture de chacun desdits espaces (25) à l'aide d'un couvercle de cylindre (24),

- la rotation, au moyen d'un moteur (28), de ladite pluralité de cylindres (21) de telle manière que l'eau ou la suspension (31) soit projetée à travers de petits orifices (26) pratiqués dans les parois des cylindres et à travers l'espace intermédiaire entre les tissus de polissage (22) pour parvenir à la surface à polir.

**Patentansprüche**

1. Verfahren zur zerstörungsfreien Bewertung der Restlebensdauer eines Turbinenrotors, gekennzeichnet durch folgende Schritte:
   - Registrieren der Betriebsbedingungen des Rotors, z.B. Temperatur, Betriebszeitdauer, Zahl der Anfahr- und Abstellvorgänge usw.,
   - durch Polieren erfolgendes Vorbehandeln eines Abschnitts einer Innenfläche der Zentralbohrung (02) des Turbinenrotors,
   - anschließendes Durchführen von Härtemessungen an der vorbehandelten Fläche,
   - Anfertigen eines Abdrucks von mindestens einem Teil der vorbehandelten Fläche, wobei der mindestens eine Teil auf der Grundlage der Ergebnisse der Härtemessungen bestimmt wird,
   - Beobachtung oder Prüfung der Zahl der gebildeten Kriechdehnungshohlräume oder -lunker anhand des Abdrucks und
   - Vergleichen der Zahl der Kriechdehnungslunker für die gegebenen Rotortestbedingungen mit einer vorbestimmten Datenkurve, die aufgestellt ist unter Heranziehung der von einem Referenzprüfling erhaltenen oder gewonnenen Ergebnisse, und anhand des Vergleichs erfolgendes Vorausbestimmen der Restlebensdauer des Rotors.

2. Verfahren nach Anspruch 1, wobei das Polieren durch elektrolytisches Polieren erfolgt.

3. Verfahren nach Anspruch 2, wobei das elektrolytische Polieren folgende Schritte umfaßt:
   - dichtes Anpressen des einen Endes eines Außenzylinders (1), der eine als Stange mit einer perforierten Scheibe am einen Ende (derselben) ausgebildete Elektrode (4) umschließt, an den zu untersuchenden Abschnitt der Innenbohrungsfläche,
   - Leiten einer korrodierenden Flüssigkeit aus einem Behälter für korrodierende Flüssigkeit in den Außenzylinder (1) und durch die Bohrungen im Scheibenteil der Elektrode (4) in Berührung mit der zu untersuchenden Fläche und sodann über einen im Außenzylinder (1) ausgebildeten Auslaß (15) zu einem Abflüssigkeitsbehälter, (und)
   - Anlegen einer Spannung zwischen die Elektrode (4) und die (genannte) Fläche, während sich die korrodierende Flüssigkeit mit dieser Fläche in Berührung befindet, so daß dazwischen während einer vorbestimmten Zeit ein elektrischer Strom fließt.

4. Verfahren nach Anspruch 1, wobei das Polieren durch Schwabbeln erfolgt.

5. Verfahren nach Anspruch 4, wobei die Schwabbelschritte umfassen:
   - Montieren und Haltern ringförmiger Schwabbelgewebescheiben (22) am Außenumfang einer Anzahl drehbarer Zylinder (21) mit jeweils einem Innenraum (25) und Befüllen des Innenraums (25) jedes drehbaren Zylinders (21) mit Wasser oder einer Suspension,
   - Verschließen jedes Raums (25) mit einem Zylinderdeckel (24), (und)
   - Drehen der mehreren Zylinder (21) mittels eines Motors (28), so daß Wasser oder Suspension (31) über in den Zylinderwänden vorgesehene enge Bohrungen (26) und durch den Zwischenraum innerhalb der Schwabbelgewebescheiben (22) auf die zu schwabbelnde Fläche spritzt.

# FIG.1

```
                    ┌──────────┐
                    │  Start   │
                    └────┬─────┘                    ┌─────────────────────┐
                         │              ┌───────────│ Data accumulation   │
                         ▼              │           └─────────────────────┘
        ┌────────────────────────────────────────┐
        │ Operation data pick-up                  │
        │ (temperature, time of use, a num-       │
        │  ber of times of start and stop, etc.)  │
        └────────────────┬───────────────────────┘
                         ▼
              ┌─────────────────────┐
              │ Pretreatment of     │
              │ inner surface of    │
              │ center bore         │
              └──────────┬──────────┘
                         │                          ┌──────────────────────┐
                         │                          │ Observation of       │
              ┌──────────────────┐                  │ metallurgical        │
              │ Hardness         │    Softened      │ structure by taking  │
              │ measurement      │    region        │ a replica            │
              └──────────┬───────┘                  └──────────┬───────────┘
                         │                                     ▼
                                                          ╱ Is    ╲    No
              ┌──────────────────┐                     ╱ creep cavity ╲──────┐
              │ Presumption of   │                     ╲  present ?   ╱      │
              │ the most         │                      ╲           ╱        │
              │ dangerous        │                         │ Yes             │
              │ position         │                         ▼                 │
              └──────────┬───────┘              ┌──────────────────┐         │
                         │                      │ Measurement of a │         │
                         ▼                      │ number of creep  │         │
              ┌──────────────────┐              │ cavities         │         │
              │ Presumption of   │              └──────────┬───────┘         │
              │ temperature      │──────┐                  ▼                 │
              └──────────┬───────┘      │       ┌──────────────────┐         │
                         │              └──────▶│ Evaluation of    │         │
                         │                      │ creep defect     │         │
                         │                      └──────────┬───────┘         │
                         │                                 │                 │
  ┌──────────────┐       ▼                                                   │
  │ Creep        │  ┌──────────────────┐                                     │
  │ breakdown    │─▶│ Evaluation of    │                                     │
  │ diagram      │  │ residual life    │                                     │
  └──────────────┘  └──────────┬───────┘                                     │
                         ╱ Is     ╲      Yes   ┌──────────────┐              │
                      ╱ residual life ╲───────▶│ Next time    │──────────────┘
                      ╲  present ?    ╱        │ reinspection │
                       ╲           ╱           └──────────────┘
                          │ No
                          ▼
              ┌──────────────────┐
              │ Operation  stop  │
              └──────────┬───────┘
                         ▼
              ┌──────────────────┐
              │ Abolishment &    │
              │ replacement      │
              └──────────────────┘
```

## FIG.2(a)

Cr-Mo-V forging
Heated Temperature
- ◆ 450°C
- ○ 500°C
- ● 550°C
- △ 600°C
- ☆ Before Heating

Vicker's Hardness Ratio Hv/Hvo

Before heating

Temperature-Time Parameter T(20+log t)

## FIG.2(b)

1% Cr-Mo-V Steel

Softening Curve
(Long Time Heated Material $\Delta G = 0$)

Creep Test Condition
- ○ 500°C  34,36 kg/mm$^2$
- ● 550°C  23,24.5.27 kg/mm$^2$
- △ 600°C  14,16 kg/mm$^2$

$G = \log T + \log(20 + \log t)$
$\Delta G = 0.00217(\delta - 11)$

Hardness Ratio Hv/Hvo

Temperature-Time-Stress Parameter $G' = G + \Delta G$

10

# FIG.3

| Shaft Portion | Drum Portion | Shaft Portion |

Hardness

Softened

Hardness Distribution Upon Manu-facture

GEN. End

GOV. End

# FIG.4

T=Constant (any arbitrary value)

A Number of Cavities

30

20

15

10

Creep Time t (hr)

## FIG.5

Steam Flow

01

02

## FIG.6

02

04

03

# FIG.7

01    03,04    02

01

Control
Box

Measure-
ment &
Recording
Box

Miniature
Computer

FIG . 8

FIG . 9

# FIG . 10

FIG .11

FIG .12

FIG.13

FIG .14